# EUROPEAN PATENT SPECIFICATION

(11) **EP 4 344 998 B1**
(45) Date of publication and mention of the grant of the patent: **08.07.2026**
(21) Application number: 23198663.9
(22) Date of filing: 20.09.2023
(51) Int. Cl.: B64C 3/18, B64C 3/20, B64C 3/26, B64C 9/00

(54) **THERMOPLASTIC INTERLOCKING GRID STRUCTURE FOR FLIGHT CONTROL SURFACES**
THERMOPLASTISCHE INEINANDERGREIFENDE GITTERSTRUKTUR FÜR FLUGSTEUERFLÄCHEN
STRUCTURE DE GRILLE THERMOPLASTIQUE À EMBOÎTEMENT POUR SURFACES DE COMMANDE DE VOL

(30) Priority: 29.09.2022 US 202263411511 P; 21.07.2023 US 202318356449
(43) Date of publication of application: 03.04.2024
(73) Proprietor: Rohr Inc., Chula Vista, CA 91910-2098 (US)
(72) Inventor: CARMODY, Liam, San Diego (US); NGO, Justin, Temecula (US); SALAZAR, Milena, Fontana (US); SHEN, Shyan Bob, San Diego (US); WOODS, Jeffrey D., Beaumont (US)
(74) Representative: Dehns

(56) References cited:
- EP-B1- 0 695 232
- WO-A1-2019/213529
- US-A- 5 849 393
- US-B1- 10 889 364

## Description

### CROSS-REFERENCE TO RELATED APPLICATIONS

This application claims priority to, and the benefit of, U.S. Provisional Patent Application No. 63/411,511, filed September 29, 2022 entitled "THERMOPLASTIC INTERLOCKING GRID STRUCTURE FOR FLIGHT CONTROL SURFACES,".

### FIELD

The present disclosure generally relates to the field of aerostructures and, more particularly, to a thermoplastic interlocking grid structure for flight control surfaces

### BACKGROUND

An aircraft may include several flight control surfaces configured to affect the yaw, roll and pitch of the aircraft during flight. Such flight control surfaces may include, for example, ailerons to affect the roll about a longitudinal axis, a rudder to affect the yaw about a vertical axis and an elevator to affect the pitch about a lateral axis, each axis being with respect to a coordinate system associated with the aircraft. Additional flight control surfaces include trailing edge flaps configured to affect the lift of a wing, leading edge slats configured to affect the stall speed of a wing and spoilers, generally located adjacent to and forward of the trailing edge flaps and configured to disrupt the airflow over a wing surface to reduce lift or to increase drag. Flight control surfaces are typically airfoil-like components configured to alter the flow of air about the wings or tail structure of the aircraft. As such, an individual flight control surface is generally simple in shape, having one or more of a leading edge, a trailing edge, a pressure side and a suction side. Notwithstanding the simple shape, a flight control surface or the airfoil-like component thereof, should possess sufficient structural integrity to withstand the forces applied to it during use over the operational life of the aircraft. Flight control surfaces exhibiting low weight and high strength may be fabricated using hollow airfoil-like bodies having stringers and solid material sections positioned where the aerodynamic forces tend to present maximal loads. Current GRID-LOCK^{®} control surface structures are machined from a billet of aluminum in an inefficient, lengthy manufacturing process. Thermoplastic materials are increasingly being used in various aerospace applications for the combination of benefits as light weight, high toughness, no storage time limit at room temperature, fast fabrication, fast assembly and suitable for automated manufacturing.

US 5 849 393 A discloses a structural element comprising a first member and a second member interengaged with one another. Each member has an inner layer formed from a machinable material and having a substantially smooth outer surface, and an outer layer having a substantially smooth inner surface of a shape generally complementary to the shape of the outer surface of the inner layer. The inner and outer layers are joined together such that the outer surface of the inner layer and the inner surface of the outer layer are in substantially continuous, face-to-face engagement with each other. The inner layer of the first member has a first formation machined therein. The structural element further comprises an element for interconnecting the first formation of the first member with the second member thereby to form the structural element.

WO 2019/213529 A1 discloses a composite wingbox structure formed of reinforced thermoplastic. The composite includes carbon fiber reinforcement and a plurality of insulation elements to localize the heat formed during the process of manufacturing the structure.

EP 0 695 232 B1 discloses a structural element comprising opposed first and second, laterally and longitudinally extended, surface structures each having a closed figure pattern of ribbing projecting therefrom toward the opposite surface structure, a separately or integrally formed ribbing structure disposed between the first and second surface structures, the opposed surface structures being interlocked by said ribbing structure in registered, mating relation.

US 10 889 364 B1 discloses a support structure for reinforcing first and second skins in an aircraft component includes a plurality of spars. A plurality of ribs is positioned on opposite sides of the spars. Each rib has a height extending from adjacent the first skin to adjacent the second skin. A plurality of first pis connects the ribs to the spars with each first pi having a length. A plurality of second pis secures the spars to the first and second skins. A plurality of third pis secures the ribs to the first and second skins. The first pis overlap with at least one of the second pis or the third pis.

### SUMMARY

According to an aspect of the invention, a manufacturing method is provided. The method includes coupling a first end of a set of spars to a first skin of a flight control surface; interlocking a set of ribs with the set of spars and coupling a first end of the set of ribs to the first skin; and coupling a second skin to a second end of the set of spars and a second end of the set of ribs, wherein the first end of the set of spars and the first end of the set of ribs are coupled to the first skin via a first set of grooved structures on the first skin, and wherein the first set of grooved structures are over-molded onto the first skin.

In various embodiments, the set of ribs interlock with the set of spars via notches in the set of ribs and notches in the set of spars. In various embodiments, the set of ribs interlock with the set of spars as a substantially perpendicular angle. In various embodiments, the first end of the set of spars and the first end of the set of ribs are fastened within the first set of grooved structures via at least one of fillet welding, adhesive bonding, spot ultrasonic welding, or continuous ultrasonic welding.

In various embodiments, interlocking the set of ribs with the set of spars further includes: fastening the set of ribs with the set of spars via fillet welding or adhesive bonding. In various embodiments, the second end of the set of spars and the second end of the set of ribs are coupled to the second skin via a second set of grooved structures on the second skin. In various embodiments, the second set of grooved structures are over-molded onto the second skin. In various embodiments, the second end of the set of spars and the second end of the set of ribs are fastened within the second set of grooved structures via adhesive bonding, spot ultrasonic welding, or continuous ultrasonic welding.

In various embodiments, the set of spars, the set of ribs, the first skin, and the second skin include a thermoplastic material including at least one of polyimide (PA), polyphenylene sulphide (PPS), polyether ether ketone (PEEK), polyetherimide (PEI), polyph-thalamide (PPA), poly ether ketone ketone (PEKK), or poly aryl ether ketone (PAEK).

Also disclosed herein, according to a further aspect of the invention, is a structure for a flight control surface. The structure includes: a first end of a set of spars coupled to a first skin of the flight control surface; a set of ribs interlocked with the set of spars and a first end of the set of ribs coupled to the first skin; and a second skin coupled to a second end of the set of spars and a second end of the set of ribs, wherein the first end of the set of spars and the first end of the set of ribs are coupled to the first skin via a first set of grooved structures on the first skin, and wherein the first set of grooved structures are over-molded onto the first skin.

In various embodiments, the set of ribs interlock with the set of spars via notches in the set of ribs and notches in the set of spars and wherein the set of ribs interlock with the set of spars as a substantially perpendicular angle. In various embodiments, the first end of the set of spars and the first end of the set of ribs are fastened within the first set of grooved structures via at least one of fillet welding, adhesive bonding, spot ultrasonic welding, or continuous ultrasonic welding.

In various embodiments, the set of ribs are fastened to the set of spars via fillet welding or adhesive bonding. In various embodiments, the second end of the set of spars and the second end of the set of ribs are coupled to the second skin via a second set of grooved structures on the second skin. In various embodiments, the second set of grooved structures are over-molded onto the second skin. In various embodiments, the second end of the set of spars and the second end of the set of ribs are fastened within the second set of grooved structures via adhesive bonding, spot ultrasonic welding, or continuous ultrasonic welding.

In various embodiments, the set of spars, the set of ribs, the first skin, and the second skin comprise a thermoplastic material comprising at least one of polyimide (PA), polyphenylene sulphide (PPS), polyether ether ketone (PEEK), polyetherimide (PEI), polyph-thalamide (PPA), poly ether ketone ketone (PEKK), or poly aryl ether ketone (PAEK).

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the following detailed description and claims in connection with the following drawings. While the drawings illustrate various embodiments employing the principles described herein, the drawings do not limit the scope of the claims.
FIG. 1A is a perspective view of an aircraft having a variety of control surfaces distributed about the wings and tail structure, in accordance with various embodiments;
FIG. 1B is a perspective view of an aircraft wing having spoilers illustrated in a deployed position, in accordance with various embodiments.
FIG. 2 is a perspective view of an aerostructure, in accordance with various embodiments
FIG. 3 is a cross-sectional view of the aerostructure of FIG. 2, taken along line 3-3, in accordance with various embodiment.
FIG. 4 illustrates a spar and a rib of the thermoplastic interlocking grid structure formed using an automated fiber placement (AFP) process or a stamp forming process and cut to form of the spar or the rib, in accordance with various embodiment.
FIG. 5 illustrates a top skin or a bottom skin formed using an automated fiber placement (AFP) process or a stamp forming process in a mold of the form of a flight control surface, in accordance with various embodiments.
FIG. 6 illustrates a plurality of grooved structures over-molded onto a top skin and a bottom skin for reception of a plurality of spars and a plurality of ribs, in accordance with various embodiments.
FIG. 7 illustrates a plurality of grooved structures over-molded onto a top skin or a bottom skin for reception of a plurality of spars and a plurality of ribs, in accordance with various embodiments.
FIG. 8 illustrates a plurality of spars and the plurality of ribs inserted into a plurality of grooved structures on a bottom skin, in accordance with various embodiments.
FIG. 9 illustrates a plurality of spars and a plurality of ribs inserted into a plurality of grooved structures on a bottom skin, in accordance with various embodiments.
FIG. 10 illustrates a top skin affixed to the opposite ends of a plurality of spars and a plurality of ribs, in accordance with various embodiments,
FIG. 11 illustrates a method for forming a flight control surface using a thermoplastic interlocking grid structure, in accordance with various embodiments.

### DETAILED DESCRIPTION

The following detailed description of various embodiments herein makes reference to the accompanying drawings, which show various embodiments by way of illustration. While these various embodiments are described in sufficient detail to enable those skilled in the art to practice the disclosure, it should be understood that other embodiments may be realized and that changes may be made without departing from the scope of the disclosure. Thus, the detailed description herein is presented for purposes of illustration only and not of limitation. Furthermore, any reference to singular includes plural embodiments, and any reference to more than one component or step may include a singular embodiment or step. Also, any reference to attached, fixed, connected, or the like may include permanent, removable, temporary, partial, full or any other possible attachment option. Additionally, any reference to without contact (or similar phrases) may also include reduced contact or minimal contact. It should also be understood that unless specifically stated otherwise, references to "a," "an," or "the" may include one or more than one and that reference to an item in the singular may also include the item in the plural. Further, all ranges may include upper and lower values and all ranges and ratio limits disclosed herein may be combined.

In current aircrafts, one-piece thermoset flight control surface structures include spars in one direction from forward to aft of the aircraft. Formation of such flight control surfaces using unidirectional spars require numerous technician hours, curing hours, as well as extra material that causes excess weight. Disclosed herein is a thermoplastic interlocking grid structure and method of forming a thermoplastic interlocking grid structure for an aerostructure an aircraft or other vehicle that is capable of flight. The various embodiments addressed herein each may be characterized as being in the form of an "aerostructure." The term "aerostructure," as used in this disclosure, means a unit, component, section, or any portion or combination of portions of an aircraft or other vehicle that is capable of flight, where "vehicle" includes any structure that is used to transport one or more payloads of any appropriate type (e.g., cargo, personnel) and including without limitation manned or unmanned flight vehicles such as an aircraft. Representative aircraft in accordance with the foregoing includes without limitation airplanes, unmanned arial vehicles, helicopters, and the like. An aerostructure in accordance with this disclosure may be in the form of a rudder, elevator, aileron, fin, wing tip, flap, slat, spoiler, trim tab, stabilizer, or external antennae for a flight vehicle, as appropriate.

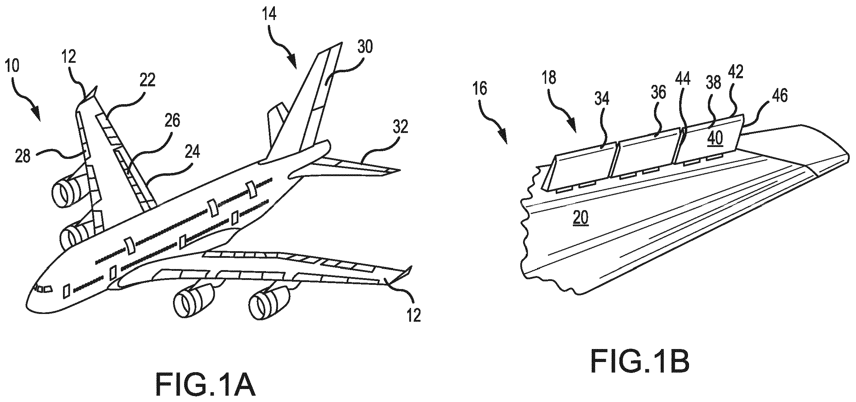

Figure 1A illustrates an aircraft 10 having a variety of control surfaces disposed about the wings 12 and the tail section 14 of the aircraft, while Figure 1B illustrates a wing 16 having a plurality of spoilers 18 disposed along an upper surface 20 of the wing 16, with each of the plurality of spoilers 18 illustrated in a deployed position. Referring specifically to Figure 1A, the variety of control surfaces typically used on the wings 12 of the aircraft 10 may include, for example, an aileron 22, a trailing edge flap 24, a spoiler 26, disposed adjacent to and forward of the trailing edge flap 24, and a leading edge slat 28. Similarly, the variety of control surfaces typically used on the tail section 14 of the aircraft 10 may include, for example, a rudder 30 and an elevator 32. While the foregoing description of the variety of control surfaces generally refers to each control surface as a single component, it will be appreciated that, in various embodiments, each individual component, e.g., the spoiler 26, may be a single component within a plurality of like components, e.g., the plurality of spoilers 18, as illustrated in Figure 1B. For example, with reference to Figure 1B, the plurality of spoilers 18 may, in various embodiments, include a first spoiler 34, a second spoiler 36 and a third spoiler 38. In various embodiments, each one of the plurality of spoilers 18 includes an upper surface 40 and a lower surface opposite the upper surface 40, a trailing edge 42, and an inboard end 44 (or a first end) and an outboard end 46 (or a second end).

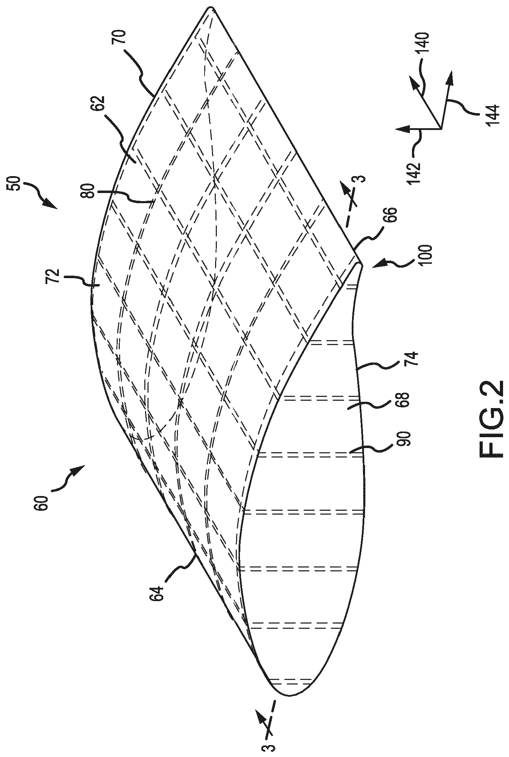

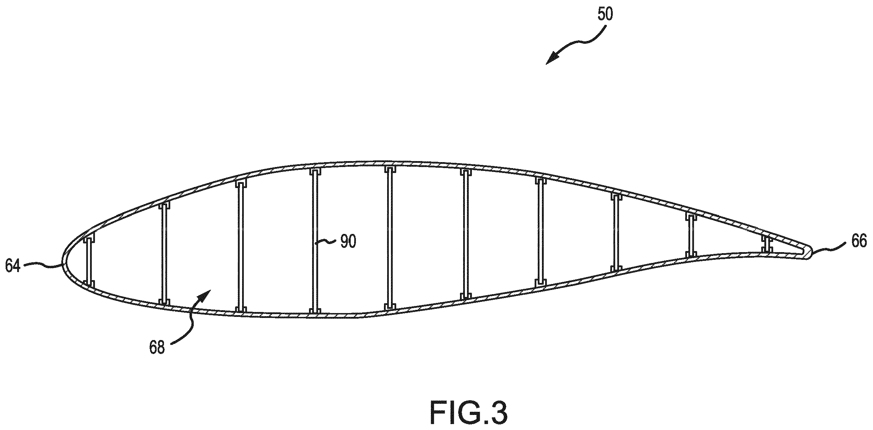

An aerostructure 50 is illustrated in FIGs. 2 and 3 and is identified by reference numeral 50. In various embodiments, the aerostructure 50 may incorporate one or more flight control surfaces for a flight vehicle (typically movable relative to the flight vehicle) or could incorporate one or more aerodynamic surfaces for a flight vehicle (e.g., a stationary surface relative to the flight vehicle). Representative flight control surface applications for the aerostructure 50 include without limitation rudders, elevators, ailerons, fins, wing tips, flaps, slats, spoilers, trim tabs, stabilizers, and the like.

The aerostructure 50 includes an outer shell 62 (e.g., which may have a leading edge 64, a trailing edge 66, a first end 68, and a second end 70; note that the cross-section taken along line 3-3 in FIG. 2 and illustrated in FIG. 3 is taken from the view of the first end 68). The first end 68 and the second end 70 are spaced along a first dimension 140 (e.g., a "z" dimension). In various embodiments, the aerostructure 50 may be a thermoplastic interlocking grid structure 60 including a top skin 72 (i.e., a second skin), a bottom skin 74 (i.e., a first skin), a plurality of spars 80 and a plurality of ribs 90. In various embodiments, the plurality of spars 80 extend vertically along a second dimension 142 (e.g., a "y" direction from the top skin 72 of the outer shell 62 to the bottom skin 74 of the outer shell 62) and that extend horizontally along a third dimension 144 (e.g., an "x" direction from the leading edge 64 to the trailing edge 66). In various embodiments, the plurality of ribs 90 extend vertically along a second dimension 142 (e.g., a "y" direction from a top skin 72 of the outer shell 62 to a bottom skin 74 of the outer shell 62) and that extend horizontally along the first dimension 140 (e.g., the "z" direction from the first end 68 to the second end 70). In various embodiments, the plurality of spars 80 interlock with the plurality of ribs 90 at an angle that is substantially perpendicular. An open space or void may exist between each adjacent pair of the plurality of spars 80 and the plurality of ribs 90. Optionally, foam or another material or combination of materials may be disposed in one or more of the open spaces.

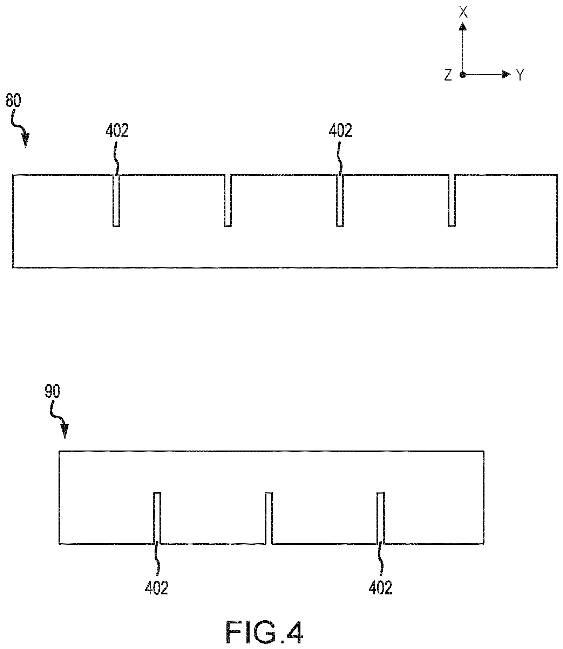

Formation of the thermoplastic interlocking grid structure for the flight control surface, i.e., aerostructure 50, is illustrated in FIGs. 4-12. Referring now to FIG. 4, in accordance with various embodiments, each spar 80 of the plurality of spars 80 and each rib 90 of the plurality of ribs 90 is formed using an automated fiber placement (AFP) process or a stamp forming process and then cut to form of the spar 80 or the rib 90. In various embodiments, the plurality of spars 80 and the plurality of ribs 90 are formed from a thermoplastic material including at least one of polyimide (PA), polyphenylene sulphide (PPS), polyether ether ketone (PEEK), polyetherimide (PEI), polyphthalamide (PPA), poly ether ketone ketone (PEKK), or poly aryl ether ketone (PAEK). In various embodiments, each spar 80 and rib 90 are cut using a device, such as a waterjet, laser, among others. In various embodiments, each spar 80 and rib 90 are cut to a specified height, i.e., along a y-axis, and a specified length, i.e., along an x-axis of the section of the flight control surface that is being formed. Additionally, in various embodiments, within each spar 80 and rib 90 a set of notches 402 are formed so that, when a rib 90 is coupled to a spar 80, the rib 90 interlocks with the spar 80.

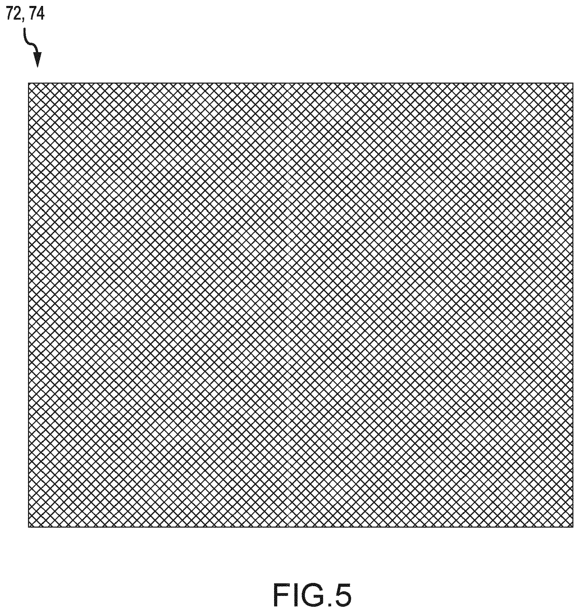

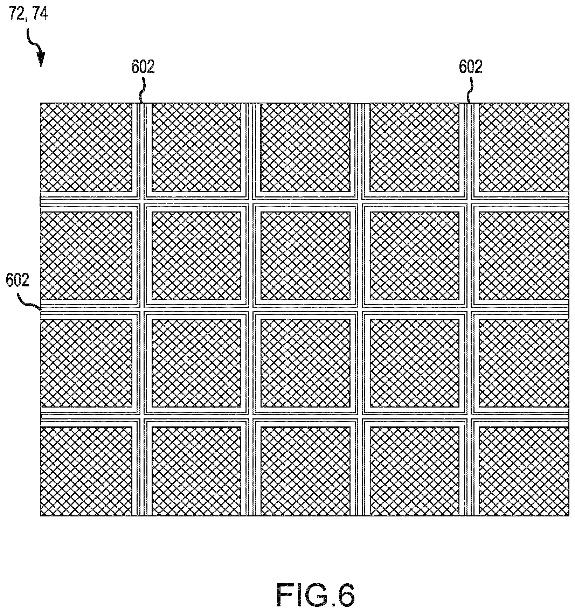

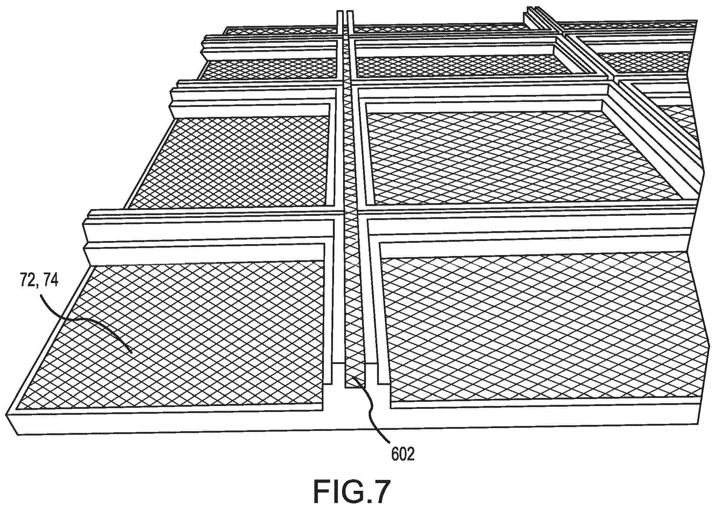

Referring now to FIG. 5, in accordance with various embodiments, each top skin 72 and bottom skin 74 is formed using an automated fiber placement (AFP) process or a stamp forming process in a mold of the form of the flight control surface. In various embodiments, the top skin 72 and the bottom skin 74 are formed from a thermoplastic material including at least one of polyimide (PA), polyphenylene sulphide (PPS), polyether ether ketone (PEEK), polyetherimide (PEI), polyphthalamide (PPA), poly ether ketone ketone (PEKK), or poly aryl ether ketone (PAEK). While in the following description and associated figures, the top skin 72 and the bottom skin 74 are illustrated in a flat form, the illustrative embodiments are not limited to flat forms as any mold may be used to form the top skin 72 and the bottom skin 74 having a plurality of structures, such as curves, corners, among others. Accordingly, in various embodiments, each top skin 72 and bottom skin 74 are formed within a mold to the dimensions of the mold. Referring now to FIG. 6, in accordance with various embodiments, once the top skin 72 and bottom skin 74 are formed, a plurality of grooved structures 602 are over-molded onto the top skin 72 and the bottom skin 74 for reception of the plurality of spars and the plurality of ribs. Referring now to FIG. 7, in accordance with various embodiments, an illustration of the plurality of grooved structures 602 over-molded onto the top skin 72 or the bottom skin 74 for reception of the plurality of spars and the plurality of ribs is provided

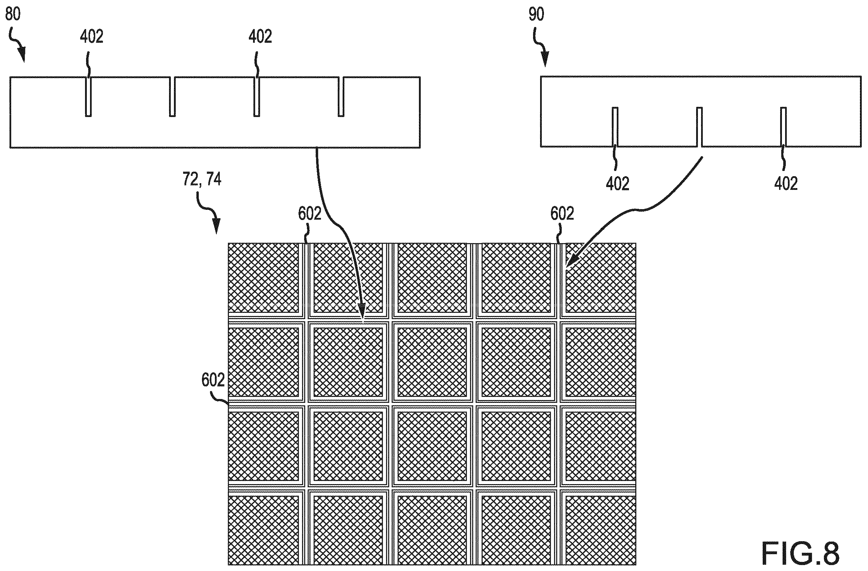

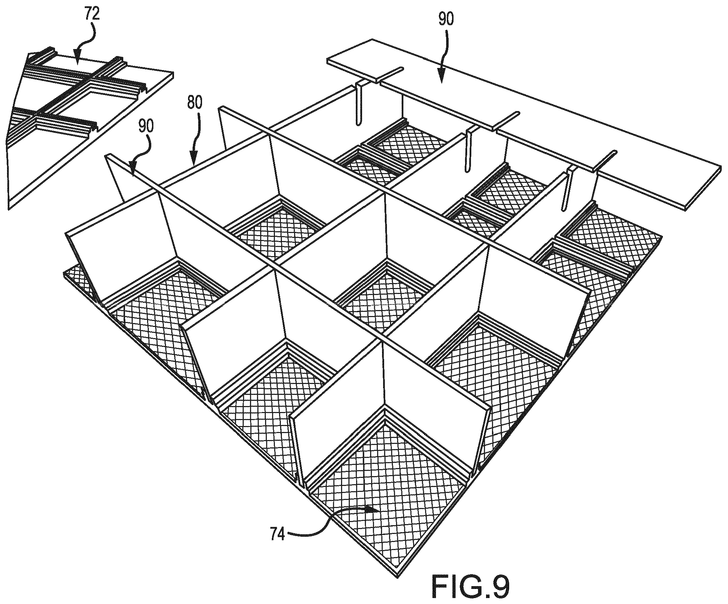

Referring now to FIG. 8, in accordance with various embodiments, once the plurality of grooved structures 602 are formed on the bottom skin 74, the plurality of spars 80 and the plurality of ribs 90 are inserted into the plurality of grooved structures 602 on the bottom skin 74. In various embodiments, in inserting the plurality of spars 80 and the plurality of ribs 90 are inserted into the plurality of grooved structures 602 on the bottom skin 74, each spar 80 is interlocked with a corresponding ribs 90 via the plurality of notches 402 in the respective spar 80 and ribs 90. Each spar 80 is interlocked with the corresponding ribs 90 such that the spar 80 at an angle that is substantially perpendicular to the ribs 90. The terms "substantially," "about," or "approximately" as used herein represent an amount close to the stated amount that still performs a desired function or achieves a desired result. For example, the term "substantially," "about," or "approximately" may refer to an amount that is within 5 degrees, within 3 degrees, within 2 degrees, or within 1 of a stated amount or value. In various embodiments, the plurality of spars 80 and the plurality of ribs 90 may be fastened into the plurality of grooved structures 602 on the bottom skin 74 using fillet welding, adhesive bonding, spot ultrasonic welding, or continuous ultrasonic welding, among others. In various embodiments, once the plurality of spars 80 and the plurality of ribs 90 are interconnected, the plurality of spars 80 and the plurality of ribs 90 may be fastened to one another at an intersection of notches 402 via fillet welding or adhesive bonding, among others. Referring now to FIG. 9, in accordance with various embodiments, illustrates the plurality of spars 80 and the plurality of ribs 90 inserted into the plurality of grooved structures 602 on the bottom skin 74.

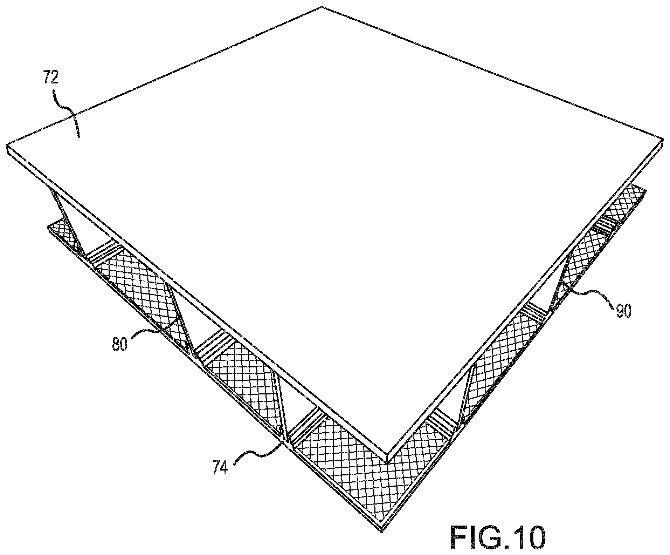

Referring now to FIG. 10, in accordance with various embodiments, once the plurality of spars 80 and the plurality of ribs 90 are inserted into the plurality of grooved structures 602 on the bottom skin 74, the plurality of spars 80 and the plurality of ribs 90 fastened into the plurality of grooved structures 602 on the bottom skin 74, and the plurality of spars 80 and the plurality of ribs 90 are fastened to one another, the top skin 72 may be affixed to the opposite ends of the plurality of spars 80 and the plurality of ribs 90 such that the plurality of grooved structures 602 on the top skin 72 couple to the plurality of spars 80 and the plurality of ribs 90. In various embodiments, the opposite ends the plurality of spars 80 and the plurality of ribs 90 may be fastened to the top skin 72 via adhesive bonding, spot ultrasonic welding, or continuous ultrasonic welding, among others.

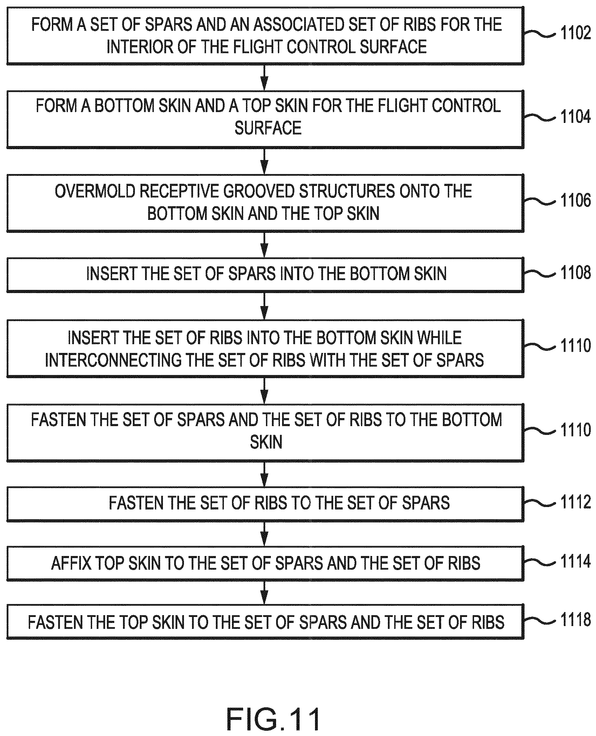

Referring now to FIG. 11, in accordance with various embodiments, a method 1100 for forming a flight control surface using a thermoplastic interlocking grid structure is illustrated. At block 1102, a set of spars and an associated set of ribs are formed for the interior of the flight control surface. At block 1104, a bottom skin and a top skin are formed for the flight control surface. At block 1106, receptive grooved structures are over-molded onto the bottom skin and the top skin. At block 1108, the set of spars are inserted into the bottom skin and, at block 1110, the set of ribs are inserted into the bottom skin while interconnecting the set of ribs with the set of spars. At block 1112, the set of spars and the set of ribs are fastened to the bottom skin. At block 1114, the set of ribs are fastened to the set of spars. At block 1116, the top skin is affixed to the set of spars and the set of ribs and, at block 1118, the top skin is fastened to the set of spars and the set of ribs.

Benefits and other advantages have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, and any elements that may cause any benefit or advantage to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C.

Systems, methods, and apparatus are provided herein. In the detailed description herein, references to "one embodiment," "an embodiment," "various embodiments," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Numbers, percentages, or other values stated herein are intended to include that value, and also other values that are about or approximately equal to the stated value, as would be appreciated by one of ordinary skill in the art encompassed by various embodiments of the present disclosure. A stated value should therefore be interpreted broadly enough to encompass values that are at least close enough to the stated value to perform a desired function or achieve a desired result. The stated values include at least the variation to be expected in a suitable industrial process, and may include values that are within 10%, within 5%, within 1%, within 0.1%, or within 0.01% of a stated value. Additionally, the terms "substantially," "about," or "approximately" as used herein represent an amount close to the stated amount that still performs a desired function or achieves a desired result. For example, the term "substantially," "about," or "approximately" may refer to an amount that is within 10% of, within 5% of, within 1% of, within 0.1% of, and within 0.01% of a stated amount or value. As used herein, the terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus. Although various embodiments have been disclosed and described, one of ordinary skill in this art would recognize that certain modifications would come within the scope of this disclosure. Accordingly, the description is not intended to be exhaustive or to limit the principles described or illustrated herein to any precise form. Many modifications and variations are possible in light of the above teaching.

## Claims

1. A manufacturing method, comprising:
coupling a first end of a set of spars (80) to a first skin (74) of a flight control surface (50); interlocking a set of ribs (90) with the set of spars and coupling a first end of the set of ribs to the first skin; and
coupling a second skin (72) to a second end of the set of spars and a second end of the set of ribs,
wherein the first end of the set of spars and the first end of the set of ribs are coupled to the first skin via a first set of grooved structures (602) on the first skin, and
**characterized in that**
the first set of grooved structures are over-molded onto the first skin.

2. The manufacturing method of claim 1, wherein the set of ribs interlock with the set of spars via notches (402) in the set of ribs and notches (402) in the set of spars and wherein the set of ribs interlock with the set of spars at a substantially perpendicular angle.

3. The manufacturing method of claim1 or 2, wherein the first end of the set of spars and the first end of the set of ribs are fastened within the first set of grooved structures via at least one of fillet welding, adhesive bonding, spot ultrasonic welding, or continuous ultrasonic welding.

4. The manufacturing method of any preceding claim, wherein interlocking the set of ribs with the set of spars further comprises:
fastening the set of ribs with the set of spars via fillet welding or adhesive bonding.

5. The manufacturing method of claim any preceding wherein the second end of the set of spars and the second end of the set of ribs are coupled to the second skin (72) via a second set of grooved structures (602) on the second skin.

6. The manufacturing method of claim 5, wherein the second set of grooved structures are over-molded onto the second skin.

7. The manufacturing method of claim 5 or 6, wherein the second end of the set of spars and the second end of the set of ribs are fastened within the second set of grooved structures via adhesive bonding, spot ultrasonic welding, or continuous ultrasonic welding.

8. The manufacturing method of any preceding claim, wherein the set of spars, the set of ribs, the first skin, and the second skin comprise a thermoplastic material comprising at least one of polyimide (PA), polyphenylene sulphide (PPS), polyether ether ketone (PEEK), polyetherimide (PEI), polyphthalamide (PPA), poly ether ketone ketone (PEKK), or poly aryl ether ketone (PAEK).

9. A structure for a flight control surface (50), the structure comprising:
a set of spars (80);
a first skin (74) of the flight control surface;
a first end of the set of spars coupled to the first skin of the flight control surface;
a set of ribs (90) interlocked with the set of spars and a first end of the set of ribs coupled to the first skin; and
a second skin (72) coupled to a second end of the set of spars and a second end of the set of ribs,
wherein the first end of the set of spars and the first end of the set of ribs are coupled to the first skin via a first set of grooved structures (602) on the first skin, and
**characterized in that** the first set of grooved structures are over-molded onto the first skin.

10. The structure of claim 9, wherein the set of ribs interlock with the set of spars via notches (402) in the set of ribs and notches (402) in the set of spars and wherein the set of ribs interlock with the set of spars at a substantially perpendicular angle.

11. The structure of claim 9 or 10, wherein the set of spars, the set of ribs, the first skin, and the second skin comprise a thermoplastic material comprising at least one of polyimide (PA), polyphenylene sulphide (PPS), polyether ether ketone (PEEK), polyetherimide (PEI), polyphthalamide (PPA), poly ether ketone ketone (PEKK), or poly aryl ether ketone (PAEK).

12. The structure of claim 9, 10 or 11, wherein the first end of the set of spars and the first end of the set of ribs are fastened within the first set of grooved structures via at least one of fillet welding, adhesive bonding, spot ultrasonic welding, or continuous ultrasonic welding.

13. The structure of any of claims 9 to 12, wherein the set of ribs are fastened to the set of spars via fillet welding or adhesive bonding.

14. The structure of any of claims 9 to 13, wherein the second end of the set of spars and the second end of the set of ribs are coupled to the second skin via a second set of grooved structures (602) on the second skin (72).

15. The structure of claim 14, wherein the second set of grooved structures are over-molded onto the second skin; and/or
wherein the second end of the set of spars and the second end of the set of ribs are fastened within the second set of grooved structures via adhesive bonding, spot ultrasonic welding, or continuous ultrasonic welding.

## Patentansprüche

1. Herstellungsverfahren, umfassend:
Koppeln eines ersten Endes eines Satzes von Holmen (80) an eine erste Haut (74) einer Flugsteuerfläche (50);
Ineinandergreifenlassen eines Satzes von Rippen (90) mit dem Satz von Holmen und Koppeln eines ersten Endes des Satzes von Rippen an die erste Haut; und
Koppeln einer zweiten Haut (72) an ein zweites Ende des Satzes von Holmen und ein zweites Ende des Satzes von Rippen,
wobei das erste Ende des Satzes von Holmen und das erste Ende des Satzes von Rippen über einen ersten Satz von genuteten Strukturen (602) auf der ersten Haut an die erste Haut gekoppelt sind, und
**dadurch gekennzeichnet, dass** der erste Satz von genuteten Strukturen auf die erste Haut aufgeformt ist.

2. Herstellungsverfahren nach Anspruch 1, wobei der Satz von Rippen mit dem Satz von Holmen über Kerben (402) in dem Satz von Rippen und Kerben (402) in dem Satz von Holmen ineinandergreift und wobei der Satz von Rippen mit dem Satz von Holmen in einem im Wesentlichen senkrechten Winkel ineinandergreift.

3. Herstellungsverfahren nach Anspruch 1 oder 2, wobei das erste Ende des Satzes von Holmen und das erste Ende des Satzes von Rippen innerhalb des ersten Satzes von genuteten Strukturen über mindestens eines von Kehlnahtschweißen, Kleben, Ultraschallpunktschweißen oder kontinuierlichem Ultraschallschweißen befestigt sind.

4. Herstellungsverfahren nach einem vorhergehenden Anspruch, wobei das Ineinandergreifenlassen des Satzes von Rippen mit dem Satz von Holmen ferner umfasst:
Befestigen des Satzes von Rippen mit dem Satz von Holmen über Kehlnahtschweißen oder Kleben.

5. Herstellungsverfahren nach einem vorhergehenden Anspruch, wobei das zweite Ende des Satzes von Holmen und das zweite Ende des Satzes von Rippen über einen zweiten Satz von genuteten Strukturen (602) auf der zweiten Haut an die zweite Haut (72) gekoppelt sind.

6. Herstellungsverfahren nach Anspruch 5, wobei der zweite Satz von genuteten Strukturen auf die zweite Haut aufgeformt ist.

7. Herstellungsverfahren nach Anspruch 5 oder 6, wobei das zweite Ende des Satzes von Holmen und das zweite Ende des Satzes von Rippen innerhalb des zweiten Satzes von genuteten Strukturen über Kleben, Ultraschallpunktschweißen oder kontinuierliches Ultraschallschweißen befestigt sind.

8. Herstellungsverfahren nach einem vorhergehenden Anspruch, wobei der Satz von Holmen, der Satz von Rippen, die erste Haut und die zweite Haut ein thermoplastisches Material umfassen, das mindestens eines von Polyimid (PA), Polyphenylensulfid (PPS), Polyetheretherketon (PEEK), Polyetherimid (PEI), Polyphthalamid (PPA), Polyetherketonketon (PEKK) oder Polyaryletherketon (PAEK) umfasst.

9. Struktur für eine Flugsteuerfläche (50), wobei die Struktur umfasst:
einen Satz von Holmen (80);
eine erste Haut (74) der Flugsteuerfläche;
ein erstes Ende des Satzes von Holmen, das an die erste Haut der Flugsteuerfläche gekoppelt ist;
einen Satz von Rippen (90), der mit dem Satz von Holmen ineinandergreift, und ein erstes Ende des Satzes von Rippen, das an die erste Haut gekoppelt ist; und
eine zweite Haut (72), die an ein zweites Ende des Satzes von Holmen und ein zweites Ende des Satzes von Rippen gekoppelt ist, wobei das erste Ende des Satzes von Holmen und das erste Ende des Satzes von Rippen über einen ersten Satz von genuteten Strukturen (602) auf der ersten Haut an die erste Haut gekoppelt sind, und
**dadurch gekennzeichnet, dass** der erste Satz von genuteten Strukturen auf die erste Haut aufgeformt ist.

10. Struktur nach Anspruch 9, wobei der Satz von Rippen mit dem Satz von Holmen über Kerben (402) in dem Satz von Rippen und Kerben (402) in dem Satz von Holmen ineinandergreift und wobei der Satz von Rippen mit dem Satz von Holmen in einem im Wesentlichen senkrechten Winkel ineinandergreift.

11. Struktur nach Anspruch 9 oder 10, wobei der Satz von Holmen, der Satz von Rippen, die erste Haut und die zweite Haut ein thermoplastisches Material umfassen, das mindestens eines von Polyimid (PA), Polyphenylensulfid (PPS), Polyetheretherketon (PEEK), Polyetherimid (PEI), Polyphthalamid (PPA), Polyetherketonketon (PEKK) oder Polyaryletherketon (PAEK) umfasst.

12. Struktur nach Anspruch 9, 10 oder 11, wobei das erste Ende des Satzes von Holmen und das erste Ende des Satzes von Rippen innerhalb des ersten Satzes von genuteten Strukturen über mindestens eines von Kehlnahtschweißen, Kleben, Ultraschallpunktschweißen oder kontinuierlichem Ultraschallschweißen befestigt sind.

13. Struktur nach einem der Ansprüche 9 bis 12, wobei der Satz von Rippen an dem Satz von Holmen über Kehlnahtschweißen oder Kleben befestigt ist.

14. Struktur nach einem der Ansprüche 9 bis 13, wobei das zweite Ende des Satzes von Holmen und das zweite Ende des Satzes von Rippen über einen zweiten Satz von genuteten Strukturen (602) auf der zweiten Haut (72) an die zweite Haut gekoppelt sind.

15. Struktur nach Anspruch 14, wobei der zweite Satz von genuteten Strukturen auf die zweite Haut aufgeformt ist; und/oder
wobei das zweite Ende des Satzes von Holmen und das zweite Ende des Satzes von Rippen innerhalb des zweiten Satzes von genuteten Strukturen über Kleben, Ultraschallpunktschweißen oder kontinuierliches Ultraschallschweißen befestigt sind.

## Revendications

1. Procédé de fabrication, comprenant :
le couplage d'une première extrémité d'un ensemble de longerons (80) à une première peau (74) d'une surface de commande de vol (50) ;
l'emboîtement d'un ensemble de nervures (90) avec l'ensemble de longerons et le couplage d'une première extrémité de l'ensemble de nervures à la première peau ; et
le couplage d'une seconde peau (72) à une seconde extrémité de l'ensemble de longerons et à une seconde extrémité de l'ensemble de nervures, dans lequel la première extrémité de l'ensemble de longerons et la première extrémité de l'ensemble de nervures sont reliées à la première peau par l'intermédiaire d'un premier ensemble de structures rainurées (602) sur la première peau, et **caractérisé en ce que** le premier ensemble de structures rainurées sont surmoulées sur la première peau.

2. Procédé de fabrication selon la revendication 1, dans lequel l'ensemble de nervures s'emboîtent avec l'ensemble de longerons par l'intermédiaire d'encoches (402) dans l'ensemble de nervures et d'encoches (402) dans l'ensemble de longerons et dans lequel l'ensemble de nervures s'emboîtent avec l'ensemble de longerons selon un angle sensiblement perpendiculaire.

3. Procédé de fabrication selon la revendication 1 ou la revendication 2, dans lequel la première extrémité de l'ensemble de longerons et la première extrémité de l'ensemble de nervures sont fixées dans le premier ensemble de structures rainurées par au moins l'un d'un soudage d'angle, d'un collage adhésif, d'un soudage par ultrasons par points ou d'un soudage par ultrasons continu.

4. Procédé de fabrication selon une quelconque revendication précédente, dans lequel l'emboîtement de l'ensemble de nervures avec l'ensemble de longerons comprend en outre :
la fixation de l'ensemble de nervures à l'ensemble de longerons par soudage d'angle ou collage adhésif.

5. Procédé de fabrication selon une quelconque revendication précédente, dans lequel la seconde extrémité de l'ensemble de longerons et la seconde extrémité de l'ensemble de nervures sont couplées à la seconde peau (72) par l'intermédiaire d'un second ensemble de structures rainurées (602) sur la seconde peau.

6. Procédé de fabrication selon la revendication 5, dans lequel le second ensemble de structures rainurées sont surmoulées sur la seconde peau.

7. Procédé de fabrication selon la revendication 5 ou la revendication 6, dans lequel la seconde extrémité de l'ensemble de longerons et la seconde extrémité de l'ensemble de nervures sont fixées dans le second ensemble de structures rainurées par collage adhésif, soudage par ultrasons par points ou soudage par ultrasons continu.

8. Procédé de fabrication selon une quelconque revendication précédente, dans lequel l'ensemble de longerons, l'ensemble de nervures, la première peau et la seconde peau comprennent un matériau thermoplastique comprenant au moins l'un des matériaux suivants : polyimide (PA), sulfure de polyphénylène (PPS), polyétheréthercétone (PEEK), polyétherimide (PEI), polyphthalamide (PPA), polyéthercétone cétone (PEKK) ou polyaryléthercétone (PAEK).

9. Structure pour une surface de commande de vol (50), la structure comprenant :
un ensemble de longerons (80) ;
une première peau (74) de la surface de commande de vol ;
une première extrémité de l'ensemble de longerons couplée à la première peau de la surface de commande de vol ;
un ensemble de nervures (90) emboîtées avec l'ensemble de longerons et une première extrémité de l'ensemble de nervures couplée à la première peau ; et
une seconde peau (72) couplée à une seconde extrémité de l'ensemble de longerons et à une seconde extrémité de l'ensemble de nervures,
dans lequel la première extrémité de l'ensemble de longerons et la première extrémité de l'ensemble de nervures sont couplées à la première peau par l'intermédiaire d'un premier ensemble de structures rainurées (602) sur la première peau, et
**caractérisée en ce que** le premier ensemble de structures rainurées sont surmoulées sur la première peau.

10. Structure selon la revendication 9, dans laquelle l'ensemble de nervures s'emboîtent avec l'ensemble de longerons par l'intermédiaire d'encoches (402) dans l'ensemble de nervures et d'encoches (402) dans l'ensemble de longerons et dans laquelle l'ensemble de nervures s'emboîtent avec l'ensemble de longerons selon un angle sensiblement perpendiculaire.

11. Structure selon la revendication 9 ou la revendication 10, dans laquelle l'ensemble de longerons, l'ensemble de nervures, la première peau et la seconde peau comprennent un matériau thermoplastique comprenant au moins l'un des matériaux suivants : polyimide (PA), sulfure de polyphénylène (PPS), polyétheréthercétone (PEEK), polyétherimide (PEI), polyphthalamide (PPA), polyéthercétone cétone (PEKK) ou polyaryléthercétone (PAEK).

12. Structure selon la revendication 9, 10 ou 11, dans laquelle la première extrémité de l'ensemble de longerons et la première extrémité de l'ensemble de nervures sont fixées dans le premier ensemble de structures rainurées par au moins l'un d'un soudage d'angle, d'un collage adhésif, d'un soudage par ultrasons par points ou d'un soudage par ultrasons continu.

13. Structure selon l'une quelconque des revendications 9 à 12, dans laquelle l'ensemble de nervures est fixé à l'ensemble de longerons par soudage d'angle ou collage adhésif.

14. Structure selon l'une quelconque des revendications 9 à 13, dans laquelle la seconde extrémité de l'ensemble de longerons et la seconde extrémité de l'ensemble de nervures sont couplées à la seconde peau par l'intermédiaire d'un second ensemble de structures rainurées (602) sur la seconde peau (72).

15. Structure selon la revendication 14, dans laquelle le second ensemble de structures rainurées sont surmoulées sur la seconde peau ; et/ou
dans laquelle la seconde extrémité de l'ensemble de longerons et la seconde extrémité de l'ensemble de nervures sont fixées dans le second ensemble de structures rainurées par collage adhésif, soudage par ultrasons par points ou soudage par ultrasons continu.
